# EUROPÄISCHE PATENTSCHRIFT

(11) **EP 1 233 247 B1**
(45) Veröffentlichungstag und Bekanntmachung des Hinweises auf die Patenterteilung: **27.07.2005**
(21) Anmeldenummer: 01130412.8
(22) Anmeldetag: 20.12.2001
(51) Int. Cl.: G01B 11/27

(54) **Ermitteln der Ausrichtung zweier Körper ( Riemenscheiben ) zueinander mit konvexem oder halbdurchlässigem Reflektor**
Evaluating alignment of two bodies ( belt pulleys ) with respect to each other with convex or half reflecting reflector
Evaluation de l'alignement respectif de deux corps ( poulies ) avec un réflecteur convexe ou semi transparent

(30) Priorität: 21.12.2000 DE 10064122
(43) Veröffentlichungstag der Anmeldung: 21.08.2002
(73) Patentinhaber: Prüftechnik Dieter Busch AG, 85737 Ismaning (DE)
(72) Erfinder: Lysen, Heinrich, 85748 Garching (DE)

(56) Entgegenhaltungen:
- US-A- 6 031 616

## Beschreibung

Die vorliegende Erfindung betrifft eine Anordnung zum Ermitteln der Ausrichtung zweier Körper, insbesondere zweier Riemenscheiben, relativ zueinander gemäß dem Oberbegriff von Anspruch 1. Ferner betrifft die Erfindung ein entsprechendes Verfahren zum Ermitteln der Ausrichtung zweier Körper relativ zueinander.

Eine solche gattungsgemäße Anordnung ist aus der US 6,031,616 bekannt, wobei die erste Referenzeinrichtung einen sich fächerförmig aufweitenden Lichtstrahl auf einen ebenen Bereich der zweiten bzw. Target-Referenzeinrichtung abgibt, wobei in der Mitte des ebenen Bereichs ein ebener Reflektor angebracht ist, zu dessen beiden seitlichen Enden sich eine Markierungslinie erstreckt, in deren Bereich die Randbereiche des fächerförmigen Lichtstrahls fallen, während der mittlere Bereich des Lichtstrahls auf den Reflektor fällt. Dieser mittlere Teil des fächerförmigen Lichtstrahls wird auf eine ebene Fläche der ersten Referenzeinrichtung zurück reflektiert, wobei sich der reflektierte Strahl aufgrund der Divergenz des einfallenden Strahls weiter aufweitet und in den Bereich einer Markierungslinie in dem ebenen Bereich der ersten Referenzeinrichtung fällt. Sowohl der einfallende als auch der reflektierte Strahl sind als Flachstrahlen mit einer im Vergleich zur Breitenausdehnung relativ geringen Höhenausdehnung ausgebildet, wobei die relative Ausrichtung der Körper, bei denen es sich um Riemenscheiben handelt, anhand der Abweichung des einfallenden fächerförmigen Strahls und des reflektierten fächerförmigen Strahls von der jeweiligen Markierungslinie ermittelt werden kann.

Bei dieser Anordnung ist einerseits nachteilig, dass sich die beiden Bereiche mit den Markierungen auf einander zugewandten, d.h. gegenüberliegenden Flächen befinden, was das Ablesen durch den Bediener insofern erschwert, als es praktisch nicht möglich ist, beide Markierungsbereiche "mit einem Blick", d.h. ohne Drehen des Kopfes, abzulesen. Ferner ist nachteilig, dass die Signalintensität, d.h. die Lichtintensität in den Markierungsbereichen, aufgrund der gewählten Strahl- und Reflektorgeometrie stark vom Abstand zwischen den beiden Markierungsflächen abhängt. Außerdem ist das System auf die Verwendung eines fächerförmigen einfallenden Lichtstrahls beschränkt, dessen Erzeugung problematisch bzw. aufwendig sein kann.

Es ist eine Aufgabe der vorliegenden Erfindung, ein Verfahren und eine Anordnung zum Ermitteln der Ausrichtung zweier Körper zueinander zu schaffen, wobei die Ablesbarkeit verbessert ist.

Es ist eine weitere Aufgabe der vorliegenden Erfindung, ein solches Verfahrens bzw. eine solche Anordnung zu schaffen, wobei kein divergierender einfallender Lichtstrahl erzeugt werden muss und dennoch eine gute Ablesbarkeit und Genauigkeit realisiert werden kann.

Eine weitere Aufgabe besteht darin, eine solche Anordnung und ein solches Verfahren zu schaffen, wobei die Signalintensität weniger stark vom Abstand der beiden Körper abhängt.

Diese Aufgabe werden erfindungs gesäß gelöst durch eine Anordnung gemäß Anspruch 1 oder 10 sowie aufgrund Verfahren gemäß Anspruch 25 oder 24.

Bei der Lösung gemäß Anspruch 1 bzw. 25 ist vorteilhaft, dass durch die konvexe Krümmung des Reflektors auch bei Verwendung eines konvergenten oder parallelen einfallenden Lichtstrahls ein sich fächerförmig aufweitender reflektierter Strahl erzeugt werden kann, was für eine vollständige und genaue Ausrichtungsmessung erforderlich ist. Ferner ist es aufgrund der Krümmung des Reflektors möglich, die Abhängigkeit der Signalintensität von dem Abstand zwischen den beiden Körpern zumindest zu verringern, insbesondere durch die Verwendung eines entsprechend konvergierenden einfallenden Strahls.

Bei der Lösung gemäß Anspruch 10 bzw. 24 ist vorteilhaft, dass dadurch, dass der Reflektor halbdurchlässig ausgebildet ist, das Lichtsignal an der ersten Markierung und an der zweiten Markierung auf in die gleiche Richtung weisenden Flächen vorgesehen werden kann, so dass eine Ablesung der beiden Markierungen "auf einen Blick" ermöglicht wird.

Bei der Lösung gemäß Anspruch 15 bzw. 25 ist vorteilhaft, dass durch die konvexe Krümmung des Reflektors auch bei Verwendung eines konvergenten oder parallelen einfallenden Lichtstrahls ein sich fächerförmig aufweitender reflektierter Strahl erzeugt werden kann, was für eine vollständige und genaue Ausrichtungsmessung erforderlich ist. Ferner ist es aufgrund der Krümmung des Reflektors möglich, die Abhängigkeit der Signalintensität von dem Abstand zwischen den beiden Körpern zumindest zu verringern, insbesondere durch die Verwendung eines entsprechend konvergierenden einfallenden Strahls.

Vorteilhafte Ausgestaltungen der Erfindung finden sich in den Unteransprüchen.

Im folgenden wird die Erfindung anhand der beigefügten Zeichnungen beispielhaft näher erläutert. Dabei zeigen:
Fig. 1 eine schematische perspektivische Ansicht einer erfindungsgemäßen Anordnung zum Ermitteln der Ausrichtung zweier Riemenscheiben gemäß einer ersten Ausführungsform;
Fig. 2 eine Ansicht wie Fig. 1, wobei eine leichte Abwandlung dargestellt ist und die Riemenscheiben weggelassen sind;
Fig. 3 eine Ansicht wie Fig. 1, wobei jedoch eine alternative Ausführungsform dargestellt ist;

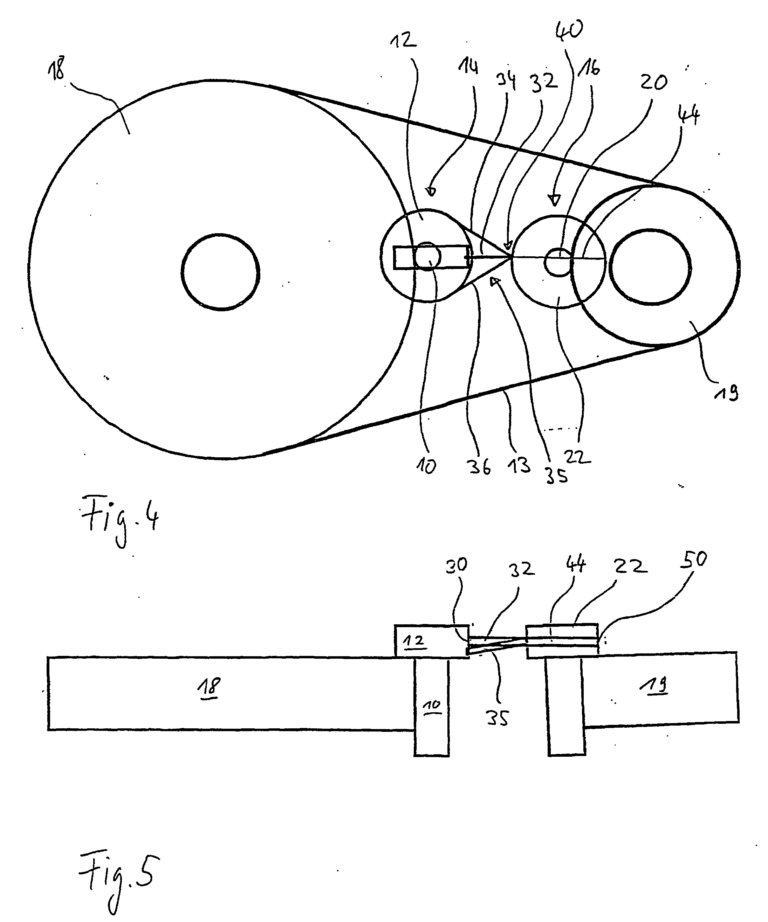

Fig. 4 eine schematische Aufsicht auf die Anordnungen der Figuren 1 bis 3;
Fig. 5 eine entsprechende Seitenansicht der Anordnung aus Fig. 4:
Fig. 6 eine Ansicht wie Fig. 4, wobei jedoch eine abgewandelte Ausführungsform dargestellt ist;
Fig. 7 eine Seitenansicht entsprechend zu Fig. 6;
Fig. 8a eine Frontalansicht des Auftreffbereichs des transmittierten Strahls aus Fig. 1 im Bereich der Markierungslinie bei Axialversatz zeigt;
Fig. 8b eine Frontalansicht des Auftreffbereichs des reflektierten Flachstrahls aus Fig. 1 im Bereich der Markierungslinie bei Rollversatz zeigt;
Fig. 8c eine Frontalansicht des Auftreffbereichs des reflektierten Flachstrahls aus Fig. 1 im Bereich der Markierungslinie bei Stampfversatz zeigt; und
Fig. 8d eine Frontalansicht des Auftreffbereichs des reflektierten Flachstrahls bei optimal ausgerichteten Riemenscheiben bei Verwendung eines Reflektors gemäß der Ausführungsform von Fig. 3.

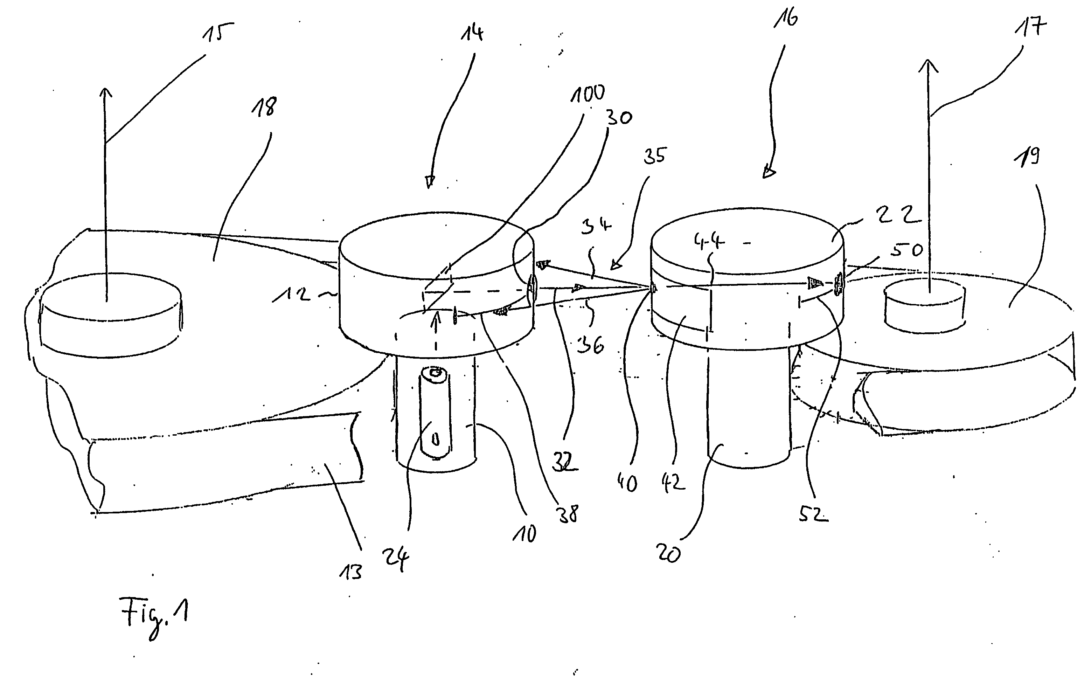

Gemäß Fig. 1 umfasst eine erste Referenzeinrichtung, die als Sendeeinrichtung 14 ausgebildet ist, einen Anlagekörper 10 und einen sich daran anschließenden Grundkörper 12, die im gezeigten Beispiel zylindrisch ausgebildet sind, wobei der Durchmesser des Grundkörpers 12 größer ist. Der Anlagekörper 10 ist präzise gefertigt und liegt an der Umfangsfläche einer gleichfalls präzise gefertigten Riemenscheibe 18 an, während der Grundkörper 12 mit einem Teil seiner Unterseite an der oberen Stirnfläche der Riemenscheibe 18 anliegt. Die Sendeeinrichtung 14 wird dabei in an sich bekannter Weise derart an der Riemenscheibe 18 angebracht, dass sie in fester und definierter räumlicher Beziehung zu der Riemenascheibe 18 steht, wobei die Drehsymmetrieachse der Sendeeinrichtung 14 möglichst exakt parallel zu der Drehachse 15 der Riemenscheibe 18 stehen sollte. Möglichkeiten einer solchen lösbaren Befestigung sind beispielsweise in der DE 199 14 300 A1 beschrieben. Vorzugsweise wird die Sendeeinrichtung 14 mittels eingebauter Permanentmagneten, durch Riemenspannung oder mit Haftgummi in Position gehalten, wobei es in letzterem Fall vorteilhaft sein kann, mit dem Haftgummi zunächst eine Andruckfeder zu fixieren, welche ihrerseits in der Lage ist, die Sendeeinrichtung 14 während des Ausrichtvorgangs zu fixieren.

Die Riemenscheibe 18 ist mittels eines Riemens 13 mit einer zweiten Riemenscheibe 19 verbunden, die ihrerseits um eine Drehachse 17 drehbar gelagert ist. Eine als Targeteinrichtung 16 ausgebildete zweite Referenzeinrichtung umfasst in ähnlicher Weise wie die Sendeeinrichtung 14 einen Anlagekörper 20, an welchen sich ein Grundkörper 22 nach oben anschließt, wobei beide Körper als Kreiszylinder ausgebildet sind und der Durchmesser des Grundkörpers 22 größer als der des Anlagekörpers 20 ist. Die Targeteinrichtung 16 wird zur Anlage an der zweiten Riemenscheibe 19 gebracht, wobei dies in analoger Weise wie bei der Anbringung des Sendekörpers 14 an der ersten Riemenscheibe 18 erfolgt. Die Drehsymmetrieachse der Targeteinrichtung 16 soll dabei möglichst exakt parallel zu der Drehachse 17 der Riemenscheibe 19 liegen.

Um einen ordnungsgemäßen und insbesondere verschleißarmen Betrieb der Riemenscheiben 18 und 19 zu gewährleisten, ist es erforderlich, dass die Riemenscheiben 18 und 19 so ausgerichtet sind, dass einerseits ihre Drehachsen 15 und 17 möglichst exakt parallel zueinander sind und außerdem die Riemenscheiben 18 und 19 möglichst in einer Ebene liegen, d.h. auch axial zueinander ausgerichtet sind.

Um eine solche Ausrichtung zu erzielen bzw. eine vorgegebene Ausrichtung zu überprüfen, werden die Sendeeinrichtung 14 an der ersten Scheibe 18 und die Targeteinrichtung 16 an der zweiten Scheibe 19 wie oben beschrieben angebracht, wobei dieser Zustand in Fig. 1 dargestellt ist.

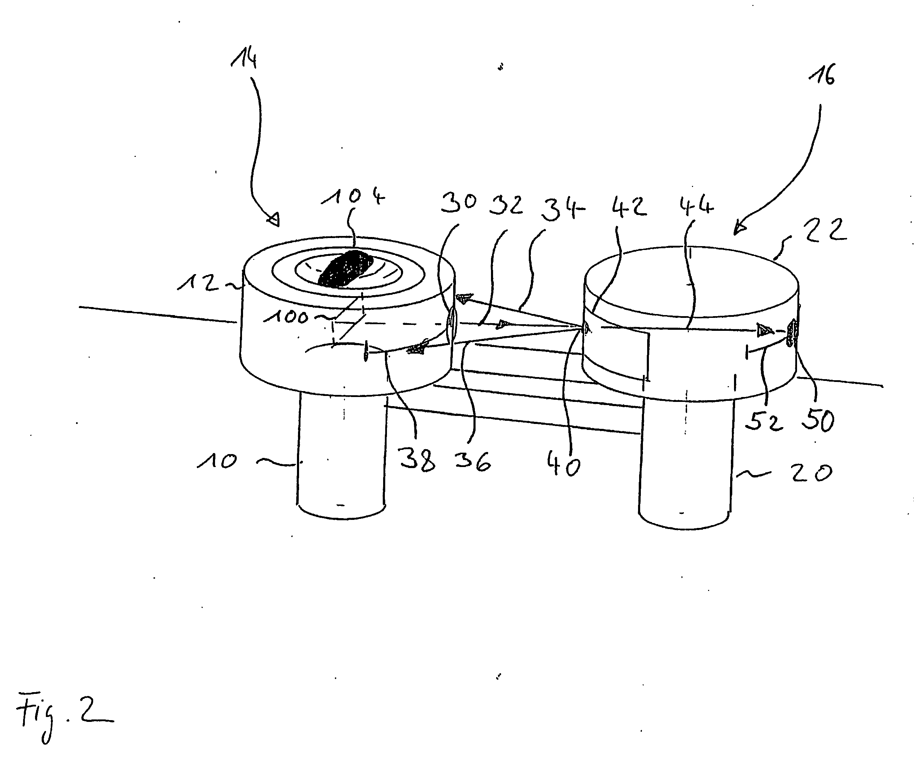

Die Sendeeinrichtung 14 ist mit einer Lichtquelle 24 versehen, die im gezeigten Beispiel in axialer Richtung in dem Anlagekörper 10 vorgesehen ist. Dabei handelt es sich vorzugsweise um einen Halbleiterlaser, dessen Licht auf einen Umlenkspiegel 100 fällt, der es in radialer Richtung in dem Grundkörper 12 zu einer Austrittsstelle 30 reflektiert. Statt dessen kann aber die Lichtquelle auch im Grundkörper 12 in radialer Richtung vorgesehen sein, wobei dann der Umlenkspiegel 100 entbehrlich ist. In Fig. 2 ist an der Oberseite des Grundkörpers 12 ein Schalter 104 dargestellt, mittels welchem die Lichtquelle 24 für die Durchführung einer Messung eingeschaltet bzw. wieder ausgeschaltet werden kann.

Der aus der Austrittsöffnung 32 austretende einfallende Strahl 32 ist von im wesentlichem kreisrunden Profil und kann entweder in kollimierter oder näherungsweise kollimierter Form, d.h. mit im wesentlichen parallelen Strahlen, oder in konvergierender Form vorliegen, wobei in letzterem Fall eine entsprechende fokussierende Optik vorgesehen ist. Der einfallende Strahl 32 trifft in einem Auftreffpunkt 40 auf einen Reflektor 42, der auf der kreiszylindrischen Außenfläche des Grundkörpers 22 der Targeteinrichtung 16 vorgesehen ist. Der Auftreffpunkt 40 hat typischerweise einen Durchmesser von einigen mm.

Der Reflektor 42 ist in einer zu der Längssymmetrielinie der Targeteinrichtung, d.h. einer im Rahmen des Anlegefehlers zu der Drehachse 17 der Riemenscheibe 19, senkrechten Ebene als konvex gekrümmte Fläche mit konstantem Krümmungsradius ausgebildet, während der Reflektor 42 in der Richtung senkrecht dazu, d.h. in Richtung der Symmetrieachse der Targeteinrichtung 16 bzw. der Drehachse 17 der Riemenscheibe 19, eben ausgebildet ist. In der Ausführungsform von Fig. 1 und 2 ist der Reflektor 42 teildurchlässig ausgebildet, so dass einerseits ein Teil des einfallenden Lichtstrahls 32 in Richtung der Sendeeinrichtung 14 zurück reflektiert wird, während ein anderer Teil als Strahl 44 durch den Reflektor 42 hindurch transmittiert wird und in einem Auftreffpunkt 50 von innen auf die dem Reflektor 42 gegenüberliegende Außenseite des Grundkörpers 22 der Targeteinrichtung 16 auftrifft. Der Grundkörper 22 der Targeteinrichtung 16 ist im Bereich zwischen dem Reflektor 42 und dem Auftreffpunkt 50 hohl oder aus transparentem Material ausgebildet. Der Bereich um den Auftreffpunkt 50 herum ist vorzugsweise als Mattscheibe ausgebildet, um eine Beobachtung des Auftreffpunkts 50 von außen zu ermöglichen. Im Bereich des Auftreffpunkts 50 ist eine Markierungslinie 52 angebracht, die als in Umfangsrichtung des Grundkörpers 22 verlaufende gerade Linie ausgebildet ist und in der Darstellung von Fig. 1 somit im wesentlichen horizontal verläuft.

Aufgrund der endlichen Ausdehnung des Auftreffpunkts 40 und der konvexen Krümmung des Reflektors 42 weitet sich der reflektierte Strahl auch bei kollimiertem oder leicht konvergentem einfallendem Strahl 32 fächerartig auf, wobei diese Aufweitung nur in horizontaler Richtung, nicht jedoch in vertikaler Richtung stattfindet, so dass ein reflektierter Flachstrahl 35 gebildet wird, wobei die seitlichen Begrenzungsstrahlen mit den Bezugszeichen 34 bzw. 36 versehen sind. Seitlich der Lichtaustrittsöffnung 30 ist an der Außenfläche des Grundkörpers 12 der Sendeeinrichtung 14 eine Markierungslinie 38 vorgesehen, welche ähnlich wie die Markierungslinie 52 in Umfangsrichtung als gerade Linie, d.h. in horizontaler Richtung, verläuft. Aufgrund der beschriebenen fächerartigen Aufweitung des reflektierten Flachstrahls 35 trifft dieser im Bereich der Markierung 38 ebenfalls im wesentlichen als Linie auf die Außenfläche des Grundkörpers 12 im Bereich der Markierungslinie 38. Die Markierungslinien 38 und 52 sind so angebracht, dass bei exakt parallel ausgerichteten Riemenscheiben 18 und 19, d.h. bei exakt parallel ausgerichteter Sendeeinrichtung 14 und Targeteinrichtung 16, und zusätzlich in gleicher Ebene befindlichen Riemenscheiben 18 und 19 der transmittierte Strahl 44 genau auf der Markierungslinie 52 auftrifft und der reflektierte Flachstrahl 35 genau auf die Markierungslinie 38 fällt. Abweichungen von dieser idealen Ausrichtung machen sich durch entsprechende Abweichungen der Auftreffstelle 50 von der Markierung 52 und der Auftreffstelle des Flachstrahls 35 von der Markierung 38 bemerkbar. So führt beispielsweise ein Axialversatz der Scheiben 18 und 19 zu einer entsprechenden vertikalen Verschiebung des Auftreffpunkts 50 des transmittierten Strahls 44. Eine solche Situation ist in Fig. 5, 7 und 8a schematisch dargestellt.

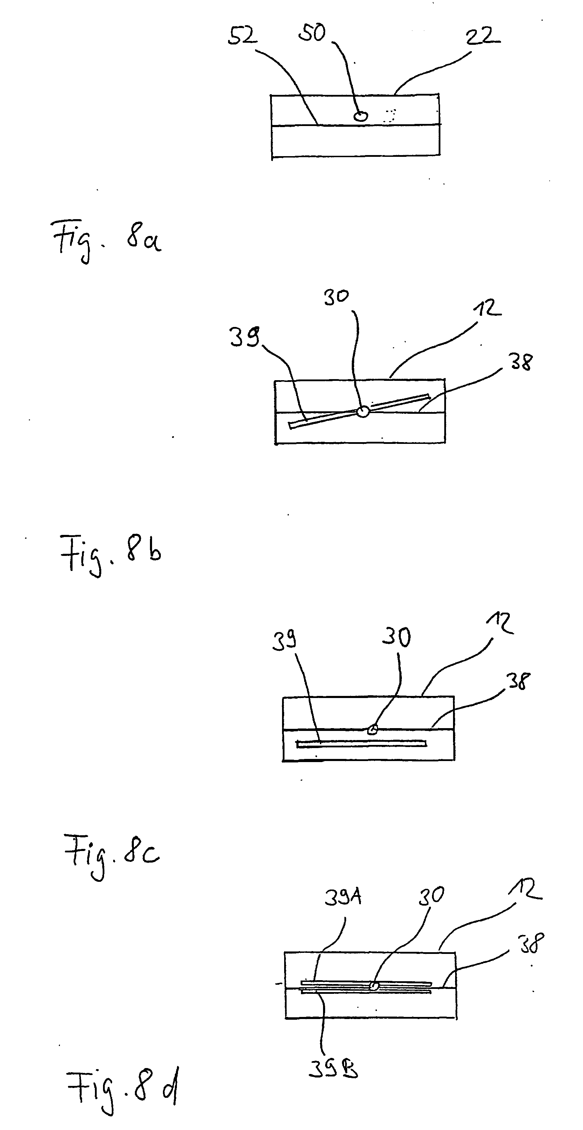

Eine Verdrehung zwischen der Sendeeinrichtung 14 und der Targeteinrichtung 16 um eine zu der Verbindungslinie zwischen den Scheiben 18 und 19 parallele Achse ("Rollversatz") führt dazu, dass der linien- bzw. bandartige Auftreffbereich 39 des reflektierten Flachstrahls 35 auf der Außenfläche des Grundkörpers 12 bezüglich der Markierungslinie 38 um einen entsprechenden Winkel verdreht ist (siehe Fig. 8b). Eine Verdrehung der Sendeeinrichtung 14 und der Targeteinrichtung 16 um eine zu der Verbindungslinie zwischen der Scheibe 18 und 19 senkrechte Achse, d.h. wenn die Einrichtungen 14 und 16 aufeinander zugeneigt oder voneinander weg gekippt sind ("Stampf-Versatz"), führt dazu, dass der Auftreffbereich 39 des Flachstrahls 35 auf der Außenfläche des Grundkörpers 12 zu der Markierungslinie 38 nach oben oder nach unten parallel verschoben ist, wie dies in den Figuren 5, 7 und 8c dargestellt ist.

Die beschriebenen Fehlorientierungen können in Kombination auftreten, wobei sich die beschriebenen Effekte dann überlagern, wobei dann beispielsweise bei einem kombinierten Roll- und Stampf-Versatz der Auftreffbereich 39 des reflektierten Flachstrahls 35 gegenüber der Markierungslinie 38 sowohl verdreht als auch parallel verschoben ist.

Die Justierung der Positionen der Riemenscheiben 18 und 19 kann nun dadurch erfolgen, dass die Lage der Riemenscheiben 18 und 19 so lange verändert wird, bis der Auftreffpunkt 50 des transmittierten Strahls 44 auf der Markierungslinie 52 liegt und der Auftreffbereich 39 des Flachstrahls 34 mittig auf der Markierungslinie 38 liegt.

Wenn sich der Abstand zwischen der Sendeeinrichtung 14 und der Targeteinrichtung 16 ändert, wenn z.B. weiter auseinander liegende Riemenscheiben zu vermessen sind, würde sich der Auftreffbereich 39 des reflektierten Flachstrahls 35 auf dem Grundkörper 12 aufgrund der Divergenz des Flachstrahls 35 verbreitern, obschon der Öffnungswinkel des Flachstrahls 35 gleich bleibt. Dies würde bei gleicher Intensität des einfallenden Strahls 32 zu einer geringeren Lichtintensität des Auftreffbereichs 39 führen, da dieser bei gleicher Gesamtleistung breiter wird. Um einer solchen unerwünschten Verbreiterung und damit Abschwächung des Auftreffbereichs 39 entgegenzuwirken, kann der einfallende Strahl 32 in entsprechender Weise durch Vorsehen einer geeigneten fokussierenden Optik (nicht dargestellt) in dem Grundkörper 12 konvergent ausgebildet sein, wobei der Auftreffpunkt 40 im konvergierenden Bereich, d.h. vor dem Fokus des Strahls 32, liegen muss. Wenn nun beispielsweise der Abstand zwischen der Sendeeinrichtung 14 und der Targeteinrichtung 16 aus einer fokusfernen Lage des Auftreffpunkts 40 zu einer fokusnahen Lage des Auftreffpunkts 40 vergrößert wird, so nimmt die Größe des Auftreffpunkts 40 aufgrund der Konvergenz des Strahls 32 ab, was zur Folge hat, dass aufgrund des gekrümmten Reflektors 42 sich der Öffnungswinkel des Flachstrahls 35, d.h. der Winkel zwischen den Randstrahlen 34 und 36, verkleinert, wodurch der von der Divergenz des Flachstrahls 35 herrührenden Verbreiterungstendenz des Auftreffbereichs 39 entgegengewirkt werden kann oder diese Verbreiterungstendenz sogar kompensiert werden kann, wenn der Konvergenzwinkel des einfallenden Strahls 32 entsprechend gewählt wird. Auf diese Weise kann eine im wesentlichen entfernungsunabhängige horizontale Breite des Auftreffbereichs 39 des Flachstrahls 35 und damit eine entsprechend entfernungsunabhängige konstante Leuchtintensität erzielt werden (die vertikale Ausdehnung des Auftreffbereichs 39 hängt ohnehin nicht von dem Abstand zwischen der Sendeeinrichtung 14 und der Targeteinrichtung 16 ab).

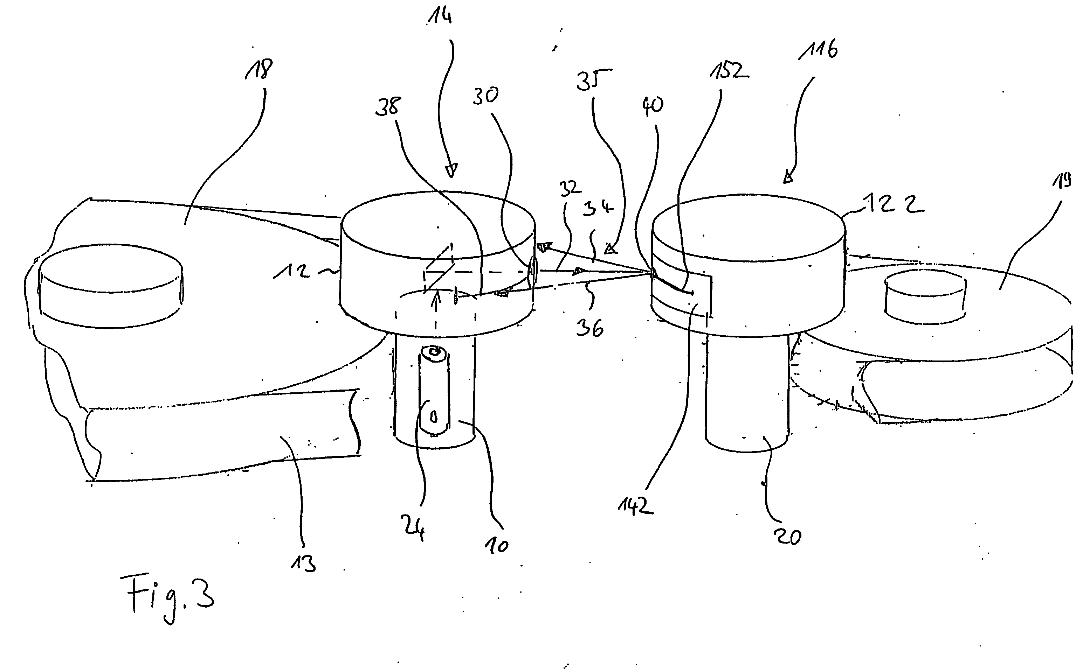

In Fig. 3 ist eine alternative Ausführungsform des Reflektors 142 dargestellt, bei welcher der Reflektor 142 des Grundkörpers 122 der Targeteinrichtung 116 nicht teildurchlässig, sondern voll reflektierend ausgebildet ist. Die Rolle des reflektierten Strahls 44 bzw. des Auftreffpunkts 50 aus der vorstehend geschilderten Ausführungsform übernimmt hier der einfallende Strahl 32 bzw. dessen Auftreffpunkt 40 auf dem Reflektor, wobei der Reflektor 142 mit einer in Umfangsrichtung verlaufenden geraden Markierungslinie 152 versehen ist, die gemäß Fig. 3 in horizontaler Richtung verläuft. Die Markierungslinie 152 ist schmaler als der Durchmesser des Auftreffpunkts 40 ausgebildet und bildet einen nicht reflektierenden Bereich innerhalb des Reflektors 142.

Wenn kein Axialversatz zwischen den Scheiben 18 und 19 vorliegt, liegt der Auftreffpunkt 40 mittig auf der Markierungslinie 152, was dann zu einem in vertikaler Richtung zweigeteilten Flachstrahl 35 führt, da im mittleren Bereich des Auftreffpunkts 40 keine Reflexion an dem Reflektor 142 stattfindet. Diese Situation ist in Fig. 8d beispielhaft dargestellt, wobei die beiden dabei entstehenden Teilauftreffbereiche des Flachstrahls 35 mit den Bezugszeichen 39A bzw. 39B bezeichnet sind. Auf diese Weise kann die Information bezüglich des Axialversatzes direkt aus der Gestalt des Auftreffbereichs 39 bestimmt werden, wobei das Auftreten von zwei getrennten Auftreffbereichen 39A und 39B anzeigt, dass kein Axialversatz vorliegt, während das Auftreten eines einzigen, nicht unterbrochenen Auftreffbereichs 39 bedeutet, dass ein Axialversatz vorliegt, da dann der Auftreffpunkt 40 nicht auf der Markierungslinie 152 liegt.

Sowohl die geschilderten Ausführungsformen mit teildurchlässigem Reflektor als auch die geschilderten Ausführungsformen mit voll reflektierendem Reflektor bieten den Vorteil, dass der Bediener die gesamte Messinformation bezüglich der Ausrichtung mit einem Blick erfassen kann, ohne dass er beispielsweise den Kopf drehen müsste.

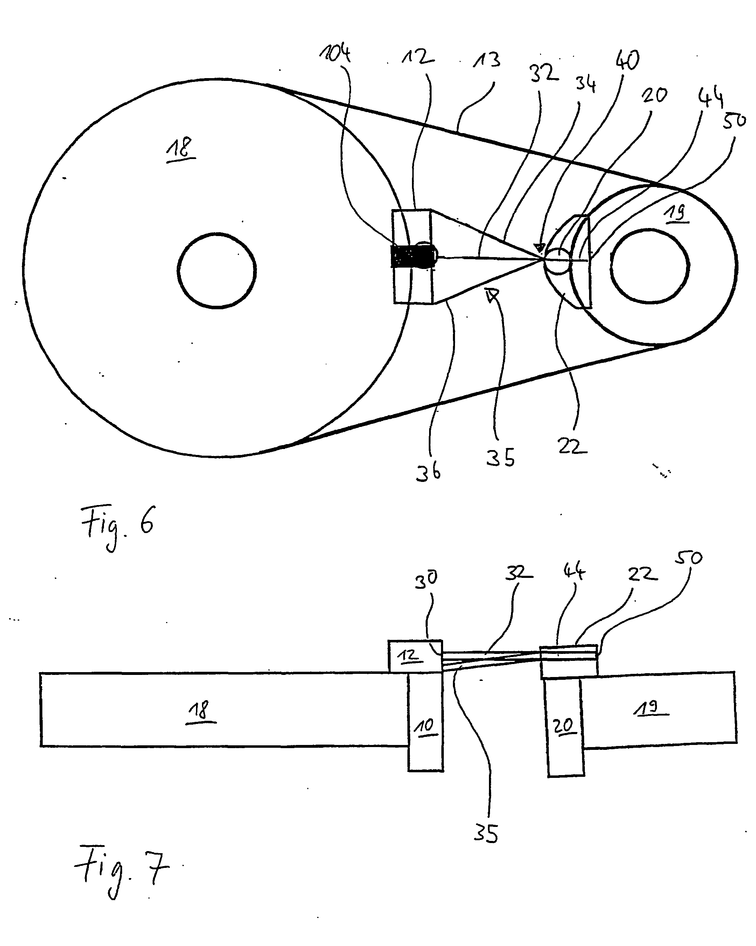

Wie die Ausführungsform gemäß Fig. 6 zeigt, sind weder der Grundkörper 12 noch der Grundkörper 22 auf die bisher beschriebene kreiszylindrische Ausgestaltung beschränkt. Vielmehr kann beispielsweise die Lichtaustritts- und Lichtauftreff-Fläche mit der Markierungslinie des Grundkörpers 12 der Sendeeinrichtung 14 als ebene Fläche ausgebildet sein. Dies gilt gleichfalls für die Lichtauftreff-Fläche für den transmittierten Strahl 44, welche ebenfalls beispielsweise als gerade Fläche, wie in Fig. 6 gezeigt, ausgebildet sein kann. Auch ist die Form der Reflektorfläche keinesfalls auf die bisher beschriebene kreiszylindrische Form beschränkt. Die konvexe Form kann statt dessen auch durch eine andere konvexe Kurve beschrieben sein, beispielsweise durch eine Parabel. Im Extremfall ist sogar denkbar, dass der Reflektor als Kante eines Prismas, d.h. im Schnitt als Winkel, ausgebildet ist, wobei der Auftreffpunkt dann auf der Kante liegen muss. Der Begriff "Konvex" ist für die Zwecke dieser Anmeldung so zu verstehen, dass die Reflektorfläche so gestaltet ist, dass ein kollimierter einfallender Strahl als divergenter reflektierter Strahl reflektiert wird.

Der Grundkörper 22 der Targeteinrichtung 16 kann beispielsweise dadurch realisiert werden, dass ein Körper aus transparentem Material, beispielsweise Plexiglas, im Bereich des Reflektors mit einer teil- oder vollreflektierenden Schicht versehen wird, während der Bereich des Auftreffpunkts des transmittierten Strahls durch entsprechende Oberflächenbehandlung, beispielsweise Aufrauhen, als streuende Mattscheibe ausgebildet wird.

Für den Reflektor können feste oder variable Krümmungsradien vorgesehen sein, so dass das Messgerät an unterschiedliche Dimensionierungen des Riemenantriebs angepasst werden kann. Es ist möglich, auf dem Umfang des Grundkörpers eine beispielsweise drei- oder vierfache Kombination aus Teilspiegeln samt zugehöriger Markierungslinie 52 vorzusehen, wobei der Grundkörper eine z.B. sechs- oder achteckige Grundform erhält.

## Patentansprüche

1. Anordnung zum Ermitteln der Ausrichtung von ausgezeichneten Achsen (15, 17) und der Axiallage eines ersten (18) und eines zweiten Körpers (19) relativ zueinander, mit einer ersten (14) und einer zweiten Referenzeinrichtung (16, 116), welche in fester räumlicher Beziehung zu der jeweiligen ausgezeichneten Achse an dem ersten Körper bzw. an dem zweiten Körper anbringbar sind, wobei die erste Referenzeinrichtung zur Abgabe eines Lichtstrahls (32) ausgebildet ist und mit einer ersten Markierung (38) versehen ist und die zweite Referenzeinrichtung (16, 116) einen Reflektor (42, 142) und eine zweite Markierung (52, 152) aufweist, **dadurch gekennzeichnet, dass** der Reflektor (42, 142) im Schnitt mit einer zu der ausgezeichneten Achse (17) des zweiten Körpers (19) senkrecht stehenden Ebene von konvexer Form ist.

2. Anordnung nach Anspruch 1, **dadurch gekennzeichnet, dass** der Reflektor (42, 142) in der Richtung parallel zu der ausgezeichneten Achse (17) des zweiten Körpers (19) eben ist.

3. Anordnung nach Anspruch 1 oder 2, **dadurch gekennzeichnet, dass** der Reflektor (42, 142) im Schnitt mit der zu der ausgezeichneten Achse (17) des zweiten Körpers (19) senkrecht stehenden Ebene kontinuierlich konvex gekrümmt ist.

4. Anordnung nach Anspruch 3, **dadurch gekennzeichnet, dass** der Krümmungsradius konstant ist.

5. Anordnung nach Anspruch 4, **dadurch gekennzeichnet, dass** der Reflektor (42, 142) als kreiszylindrische Fläche ausgebildet ist.

6. Anordnung nach einem der Ansprüche 1 bis 5, **dadurch gekennzeichnet, dass** die zweite Markierung (152) an dem Reflektor (142) ausgebildet ist.

7. Anordnung nach Anspruch 6, **dadurch gekennzeichnet, dass** die zweite Markierung (152) als nicht-reflektierender Bereich ausgebildet ist.

8. Anordnung nach Anspruch 6 oder 7, **dadurch gekennzeichnet, dass** die zweite Markierung (152) als gerade Linie ausgebildet ist, die in etwa in einer zu der ausgezeichneten Achse (17) des zweiten Körpers (19) senkrecht stehenden Ebene liegt.

9. Anordnung nach einem der Ansprüche 6 bis 8, **dadurch gekennzeichnet, dass** die zweite Markierung (152) so angeordnet und ihre Ausdehnung in Richtung der ausgezeichneten Achse (17) des zweiten Körpers (19) so gewählt ist, dass ohne Axialversatz des ersten (18) und des zweiten Körpers zueinander der Auftrefffleck (40) des von der ersten Referenzeinrichtung (14) abgegebenen Strahls (32) auf dem Reflektor (142) mittig von der zweiten Markierung geteilt wird.

10. Anordnung zum Ermitteln der Ausrichtung von ausgezeichneten Achsen (15, 17) und der Axiallage eines ersten (18) und eines zweiten Körpers (19) relativ zueinander, mit einer ersten (14) und einer zweiten Referenzeinrichtung (16), welche in fester räumlicher Beziehung zu der jeweiligen ausgezeichneten Achse an dem ersten Körper bzw. an dem zweiten Körper anbringbar sind, wobei die erste Referenzeinrichtung zur Abgabe eines Lichtstrahls (32) ausgebildet ist und mit einer ersten Markierung (38) versehen ist und die zweite Referenzeinrichtung einen Reflektor (42) und eine zweite Markierung (52) aufweist, **dadurch gekennzeichnet, dass** der Reflektor (42) halbdurchlässig ausgebildet ist, wobei ein Teil (35) des Lichtstrahls (32) in den Bereich der ersten Markierung (38) reflektiert wird und ein Teil (44) des Lichtstrahls (32) in den Bereich der zweiten Markierung (52) transmittiert wird.

11. Anordnung nach Anspruch 10, **dadurch gekennzeichnet, dass** erste Markierung (38) benachbart zu der Lichststrahl-Austrittsstelle (30) aus der ersten Referenzeinrichtung (14) vorgesehen ist.

12. Anordnung nach Anspruch 11, **dadurch gekennzeichnet, dass** die zweite Markierung (52) gegenüberliegend zu dem Reflektor (42) angeordnet ist

13. Anordnung nach Anspruch 12, **dadurch gekennzeichnet, dass** der Bereich der zweiten Markierung (52) für den transmittierten Lichtstrahl (44) als Mattscheibe ausgebildet ist, so dass der von dem transmittierten Lichtstrahl erzeugte Leuchtfleck (50) von außen erkennbar ist.

14. Anordnung nach einem der vorhergehenden Ansprüche, **dadurch gekennzeichnet, dass** die erste (38) und die zweite Markierung (52) jeweils als gerade Linie ausgebildet sind, die in etwa in einer zu der ausgezeichneten Achse (15, 17) des ersten (18) bzw. des zweiten Körpers (19) senkrecht stehenden Ebene liegt.

15. Anordnung nach Anspruch 14, **dadurch gekennzeichnet, dass** der Bereich der ersten Markierung (38) als zylindrische Fläche ausgebildet ist, wobei die Zylinderachse in etwa parallel zu der ausgezeichneten Achse (15) des ersten Köpers (18) orientiert ist.

16. Anordnung nach einem der Ansprüche 10 bis 14, **dadurch gekennzeichnet, dass** der Reflektor (42) im Schnitt mit einer zu der ausgezeichneten Achse (17) des zweiten Körpers (19) senkrecht stehenden Ebene von konvexer Form ist.

17. Anordnung nach einem der vorhergehenden Ansprüche, **dadurch gekennzeichnet, dass** der von der ersten Referenzeinrichtung (14) abgegebene Lichtstrahl (32) konvergente Form hat.

18. Anordnung nach einem der vorhergehenden Ansprüche, **dadurch gekennzeichnet, dass** es sich bei dem Lichtstrahl (32) um Laserlicht handelt.

19. Anordnung nach einem der vorhergehenden Ansprüche, **dadurch gekennzeichnet, dass** der Lichtstrahl (32) in einer Ebene abgegeben wird, die senkrecht zu der ausgezeichneten Achse (15) des ersten Körpers (18) steht.

20. Anordnung nach einem der vorhergehenden Ansprüche, **dadurch gekennzeichnet, dass** die zweite Referenzeinrichtung (16) so ausgebildet ist, dass der von dem Reflektor (42) reflektierte Strahl (35) zumindest näherungsweise in der gleichen Ebene wie der abgegebene Strahl (32) liegt.

21. Anordnung nach einem der vorhergehenden Ansprüche, **dadurch gekennzeichnet, dass** der erste (18) und der zweite Körper (19) drehbar gelagert sind und es sich bei der ausgezeichneten Achse (15, 17) jeweils um die Drehachse handelt.

22. Anordnung nach Anspruch 21, **dadurch gekennzeichnet, dass** es sich bei dem ersten und dem zweiten Körper um zwei Riemenscheiben (18, 19) handelt.

23. Anordnung nach Anspruch 22, **dadurch gekennzeichnet, dass** die erste (14) und die zweite Referenzeinrichtung (16) jeweils zur Anlage an einer der Stirnflächen der ersten (18) bzw. der zweiten Riemenscheibe (19) ausgebildet sind.

24. Verfahren zum Ermitteln der Ausrichtung von ausgezeichneten Achsen (15, 17) und der Axiallage eines ersten (18) und eines zweiten Körpers (19) relativ zueinander, wobei eine erste (14) und eine zweite Referenzeinrichtung (16) in fester Beziehung zu der jeweiligen ausgezeichneten Achse an dem ersten Körper bzw. an dem zweiten Körper angebracht werden, von der ersten Referenzeinrichtung ein Lichtstrahl (32) auf einen an der zweiten Referenzeinrichtung vorgesehen Reflektor (42) abgegeben wird, welcher einen Teil (35) des Lichtstrahls in den Bereich einer ersten Markierung (38) an der ersten Referenzeinrichtung reflektiert und einen Teil (44) des Lichtstrahls in den Bereich einer zweiten Markierung (52) an der zweiten Referenzeinrichtung transmittiert, und die Ausrichtung anhand der Position des von dem Lichtstrahl erzeugten Leuchtflecks im Bereich der ersten bzw. zweiten Markierung ermittelt wird.

25. Verfahren zum Ermitteln der Ausrichtung von ausgezeichneten Achsen (15, 17) und der Axiallage eines ersten (18) und eines zweiten Körpers (19) relativ zueinander, wobei eine erste (14) und eine zweite Referenzeinrichtung (16, 116) in fester Beziehung zu der jeweiligen ausgezeichneten Achse an dem ersten Körper bzw. an dem zweiten Körper angebracht werden, von der ersten Referenzeinrichtung ein Lichtstrahl (32) auf einen an der zweiten Referenzeinrichtung vorgesehen Reflektor (42, 142) abgegeben wird, der im Schnitt mit einer zu der ausgezeichneten Achse (17) des zweiten Körpers (19) senkrecht stehenden Ebene von konvexer Form ist und mindestens einen Teil (35) des Lichtstrahls (32) in den Bereich einer ersten Markierung (38) an der ersten Referenzeinrichtung reflektiert, und die Ausrichtung mindestens zum Teil anhand der Position des von dem Lichtstrahl erzeugten Leuchtflecks im Bereich der ersten Markierung ermittelt wird.

## Claims

1. Arrangement for determining the alignment of labelled axes (15, 17) and the axial position of a first (18) and a second body (19) with respect to each other, having a first (14) and a second reference device (16, 116), which can be brought into a fixed physical relationship with the respectively labelled axis on the first body and on the second body, the first reference device being designed to emit a light beam (32) and being provided with a first mark (38), and the second reference device (16, 116) having a reflector (42, 142) and a second mark (52, 152), **characterized in that** the reflector (42, 142) is of convex form in the section with a plane at right angles to the labelled axis (17) of the second body (19).

2. Arrangement according to Claim 1, **characterized in that** the reflector (42, 142) is flat in the direction parallel to the labelled axis (17) of the second body (19).

3. Arrangement according to Claim 1 or 2, **characterized in that** the reflector (42, 142) is curved continuously convexly in the section with the plane at right angles to the labelled axis (17) of the second body (19).

4. Arrangement according to Claim 3, **characterized in that** the radius of curvature is constant.

5. Arrangement according to Claim 4, **characterized in that** the reflector (42, 142) is formed as a circularly cylindrical surface.

6. Arrangement according to one of Claims 1 to 5, **characterized in that** the second mark (152) is formed on the reflector (142).

7. Arrangement according to Claim 6, **characterized in that** the second mark (152) is formed as a nonreflective area.

8. Arrangement according to Claim 6 or 7, **characterized in that** the second mark (152) is formed as a straight line, which is located approximately in a plane at right angles to the labelled axis (17) of the second body (19).

9. Arrangement according to one of Claims 6 to 8, **characterized in that** the second mark (152) is arranged and its extent in the direction of the labelled axis (17) of the second body (19) is selected, both such that, without any axial offset of the first (18) and of the second body with respect to each other, the spot (40) at which the beam (32) emitted by the first reference device (14) strikes the reflector (142) is divided centrally by the second mark.

10. Arrangement for determining the alignment of labelled axes (15, 17) and the axial position of a first (18) and a second body (19) with respect to each other, having a first (14) and a second reference device (16), which can be brought into a fixed physical relationship with the respectively labelled axis on the first body and on the second body, the first reference device being designed to emit a light beam (32) and being provided with a first mark (38), and the second reference device having a reflector (42) and a second mark (52), **characterized in that** the reflector (42) is semitransparent, part (35) of the light beam (32) being reflected into the region of the first mark (38) and part (44) of the light beam (32) being transmitted into the region of the second mark (52).

11. Arrangement according to Claim 10, **characterized in that** the first mark (38) is provided adjacent to the light beam exit point (30) from the first reference device (14).

12. Arrangement according to Claim 11, **characterized in that** the second mark (52) is arranged opposite the reflector (42).

13. Arrangement according to Claim 12, **characterized in that** the region of the second mark (52) for the transmitted light beam (44) is formed as a diffuser, so that the luminous spot (50) produced by the transmitted light beam can be detected from outside.

14. Arrangement according to one of the preceding claims, **characterized in that** the first (38) and the second mark (52) are each formed as a straight line, which lies approximately in a plane at right angles to the labelled axis (15, 17) of the first (18) and the second body (19) respectively.

15. Arrangement according to Claim 14, **characterized in that** the region of the first mark (38) is formed as a cylindrical surface, the axis of the cylinder being oriented approximately parallel to the labelled axis (15) of the first body (18).

16. Arrangement according to one of Claims 10 to 14, **characterized in that** the reflector (42) is of convex form in the section with a plane at right angles to the labelled axis (17) of the second body (19).

17. Arrangement according to one of the preceding claims, **characterized in that** the light beam (32) emitted by the first reference device (14) has a convergent form.

18. Arrangement according to one of the preceding claims, **characterized in that** the light beam (32) is laser light.

19. Arrangement according to one of the preceding claims, **characterized in that** the light beam (32) is emitted in a plane which is at right angles to the labelled axis (15) of the first body (18).

20. Arrangement according to one of the preceding claims, **characterized in that** the second reference device (16) is formed in such a way that the beam (35) reflected from the reflector (42) lies at least approximately in the same plane as the emitted beam (32).

21. Arrangement according to one of the preceding claims, **characterized in that** the first (18) and the second body (19) are mounted such that they can rotate, and the labelled axis (15, 17) is in each case the axis of rotation.

22. Arrangement according to Claim 21, **characterized in that** the first and the second bodies are two belt pulleys (18, 19).

23. Arrangement according to Claim 22, **characterized in that** the first (14) and the second reference device (16) are in each case formed so as to rest on one of the end faces of the first (18) and the second belt pulley (19) respectively.

24. Method for determining the alignment of labelled axes (15, 17) and the axial position of a first (18) and a second body (19) with respect to each other, a first (14) and a second reference device (16) being brought into a fixed relationship with the respectively labelled axis on the first body and on the second body, a light beam (32) being emitted by the first reference device onto a reflector (42) which is provided on the second reference device, reflects part (35) of the light beam into the region of a first mark (38) on the first reference device and transmits part (44) of the light beam into the region of a second mark (52) on the second reference device, and the alignment being determined by using the position of the luminous spot produced by the light beam in the region of the first and second marks.

25. Method for determining the alignment of labelled axes (15, 17) and the axial position of a first (18) and a second body (19) with respect to each other, a first (14) and a second reference device (16, 116) being brought into a fixed relationship with the respectively labelled axis on the first body and on the second body, a light beam (32) being emitted by the first reference device onto a reflector (42, 142) which is provided on the second reference device, which is of convex form in the section with a plane at right angles to the labelled axis (17) of the second body (19) and reflects at least part (35) of the light beam (32) into the region of a first mark (38) on the first reference device, and the alignment being determined at least to some extent by using the position of the luminous spot produced by the light beam in the region of the first mark.

## Revendications

1. Agencement pour évaluer l'alignement d'axes remarquables (15, 17) et la position axiale d'un premier (18) et d'un deuxième corps (19) l'un par rapport à l'autre, avec un premier (14) et un deuxième dispositif de référence (16, 116), qui peuvent être amenés en relation spatiale fixe par rapport à l'axe remarquable respectif sur le premier corps ou sur le deuxième corps, le premier dispositif de référence étant réalisé pour émettre un faisceau lumineux (32) et étant pourvu d'un premier marquage (38) et le deuxième dispositif de référence (16, 116) présentant un réflecteur (42, 142) et un deuxième marquage (52, 152), **caractérisé en ce que** le réflecteur (42, 142) a une forme convexe en coupe avec un plan perpendiculaire à l'axe remarquable (17) du deuxième corps (19).

2. Agencement selon la revendication 1, **caractérisé en ce que** le réflecteur (42, 142) est plan dans la direction parallèle à l'axe remarquable (17) du deuxième corps (19).

3. Agencement selon la revendication 1 ou 2, **caractérisé en ce que** le réflecteur (42, 142) a une courbure convexe continue en coupe avec le plan perpendiculaire à l'axe remarquable (17) du deuxième corps (19).

4. Agencement selon la revendication 3, **caractérisé en ce que** le rayon de courbure est constant.

5. Agencement selon la revendication 4, **caractérisé en ce que** le réflecteur (42, 142) est réalisé sous la forme d'une surface cylindrique circulaire.

6. Agencement selon l'une quelconque des revendications 1 à 5, **caractérisé en ce que** le deuxième marquage (152) est réalisé sur le réflecteur (142).

7. Agencement selon la revendication 6, **caractérisé en ce que** le deuxième marquage (152) est réalisé sous la forme d'une région non réfléchissante.

8. Agencement selon la revendication 6 ou 7, **caractérisé en ce que** le deuxième marquage (152) est réalisé sous la forme d'une ligne droite, qui s'étend approximativement dans un plan perpendiculaire à l'axe remarquable (17) du deuxième corps (19).

9. Agencement selon l'une quelconque des revendications 6 à 8, **caractérisé en ce que** le deuxième marquage (152) est disposé de telle sorte, et son étendue dans la direction de l'axe remarquable (17) du deuxième corps (19) est choisie de telle sorte que sans décalage axial du premier (18) et du deuxième corps l'un par rapport à l'autre, le point d'incidence (40) du faisceau (32) émis par le premier dispositif de référence (14) sur le réflecteur (142) soit coupé au milieu par le deuxième marquage.

10. Agencement pour évaluer l'alignement d'axes remarquables (15, 17) et la position axiale d'un premier (18) corps et d'un deuxième corps (19) l'un par rapport à l'autre, avec un premier (14) et un deuxième dispositif de référence (16), qui peuvent être amenés en relation spatiale fixe par rapport à l'axe remarquable respectif sur le premier corps ou sur le deuxième corps, le premier dispositif de référence étant réalisé pour émettre un faisceau lumineux (32) et étant pourvu d'un premier marquage (38) et le deuxième dispositif de référence présentant un réflecteur (42) et un deuxième marquage (52), **caractérisé en ce que** le réflecteur (42) est réalisé de manière semi-transparente, une partie (35) du faisceau lumineux (32) étant réfléchie dans la région du premier marquage (38) et une partie (44) du faisceau lumineux (32) étant transmise dans la région du deuxième marquage (52).

11. Agencement selon la revendication 10, **caractérisé en ce que** le premier marquage (38) est prévu à proximité du point de sortie du faisceau lumineux (30) hors du premier dispositif de référence (14).

12. Agencement selon la revendication 11, **caractérisé en ce que** le deuxième marquage (52) est disposé à l'opposé par rapport au réflecteur (42).

13. Agencement selon la revendication 12, **caractérisé en ce que** la région du deuxième marquage (52) pour le faisceau lumineux transmis (44) est réalisée sous la forme d'un écran dépoli, de sorte que le spot lumineux (50) produit par le faisceau lumineux transmis soit visible de l'extérieur.

14. Agencement selon l'une quelconque des revendications précédentes, **caractérisé en ce que** le premier (38) et le deuxième marquage (52) sont réalisés chacun sous la forme d'une ligne droite, qui s'étend approximativement dans un plan perpendiculaire à l'axe remarquable (15, 17) du premier (18), respectivement du deuxième corps (19).

15. Agencement selon la revendication 14, **caractérisé en ce que** la région du premier marquage (38) est réalisée sous la forme d'une surface cylindrique, l'axe du cylindre étant orienté approximativement parallèlement à l'axe remarquable (15) du premier corps (18).

16. Agencement selon l'une quelconque des revendications 10 à 14, **caractérisé en ce que** le réflecteur (42) a une forme convexe en coupe avec un plan perpendiculaire à l'axe remarquable (17) du deuxième corps (19).

17. Agencement selon l'une quelconque des revendications précédentes, **caractérisé en ce que** le faisceau lumineux (32) émis par le premier dispositif de référence (14) a une forme convergente.

18. Agencement selon l'une quelconque des revendications précédentes, **caractérisé en ce que** le faisceau lumineux (32) est de la lumière laser.

19. Agencement selon l'une quelconque des revendications précédentes, **caractérisé en ce que** le faisceau lumineux (32) est émis dans un plan qui est perpendiculaire à l'axe remarquable (15) du premier corps (18).

20. Agencement selon l'une quelconque des revendications précédentes, **caractérisé en ce que** le deuxième dispositif de référence (16) est réalisé de telle sorte que le faisceau (35) réfléchi par le réflecteur (42) se situe au moins approximativement dans le même plan que le faisceau émis (32).

21. Agencement' selon l'une quelconque des revendications précédentes, **caractérisé en ce que** le premier (18) et le deuxième corps (19) sont montés à rotation et que l'axe remarquable (15, 17) est dans chaque cas l'axe de rotation.

22. Agencement selon la revendication 21, **caractérisé en ce que** le premier et le deuxième corps sont deux poulies (18, 19).

23. Agencement selon la revendication 22, **caractérisé en ce que** le premier (14) et le deuxième dispositif de référence (16) sont à chaque fois réalisés pour s'appliquer contre une face frontale de la première (18) ou de la deuxième poulie (19).

24. Procédé pour évaluer l'alignement d'axes remarquables (15, 17) et la position axiale d'un premier (18) et d'un deuxième corps (19) l'un par rapport à l'autre, un premier (14) et un deuxième dispositif de référence (16) pouvant être amenés en relation fixe par rapport à l'axe remarquable respectif sur le premier corps ou sur le deuxième corps, un faisceau lumineux (32) étant émis par le premier dispositif de référence sur un réflecteur (42) prévu sur le deuxième dispositif de référence, lequel réflecteur réfléchit une partie (35) du faisceau lumineux dans la région d'un premier marquage (38) sur le premier dispositif de référence et transmet une partie (44) du faisceau lumineux dans la région d'un deuxième marquage (52) sur le deuxième dispositif de référence, et l'alignement étant évalué à l'aide de la position du spot lumineux produit par le faisceau lumineux dans la région du premier, respectivement du deuxième marquage.

25. Procédé pour évaluer l'alignement d'axes remarquables (15, 17) et la position axiale d'un premier (18) et d'un deuxième corps (19) l'un par rapport à l'autre, un premier (14) et un deuxième dispositif de référence (16, 116) pouvant être amenés en relation fixe par rapport à l'axe remarquable respectif sur le premier corps ou sur le deuxième corps, un faisceau lumineux (32) étant émis par le premier dispositif de référence sur un réflecteur (42, 142) prévu sur le deuxième dispositif de référence, lequel a une forme convexe en coupe avec un plan perpendiculaire à l'axe remarquable (17) du deuxième corps (19) et réfléchit au moins une partie (35) du faisceau lumineux (32) dans la région d'un premier marquage (38) sur le premier dispositif de référence, et l'alignement étant évalué au moins en partie à l'aide de la position du spot lumineux produit par le faisceau lumineux dans la région du premier marquage.
